Europäisches Patentamt

European Patent Office

Office européen des brevets

(11) Veröffentlichungsnummer: **0 229 268**
**A1**

(12) **EUROPÄISCHE PATENTANMELDUNG**

(21) Anmeldenummer: **86116283.2**

(22) Anmeldetag: **24.11.86**

(51) Int. Cl.⁴: **H02J 13/00** , **H01R 13/66** , **G05B 19/04**

(30) Priorität: **17.12.85 CH 5401/85**

(43) Veröffentlichungstag der Anmeldung:
**22.07.87 Patentblatt 87/30**

(84) Benannte Vertragsstaaten:
**AT BE DE FR GB NL**

(71) Anmelder: **ZELLWEGER USTER AG**
**Wilstrasse 11**
**CH-8610 Uster(CH)**

(72) Erfinder: **Müller, Beat**
**Witellikerstrasse 10**
**CH-8702 Zollikon Dorf(CH)**
Erfinder: **Burkhard, Hans**
**Wildsbergstrasse 10**
**CH-8606 Greifensee(CH)**

(54) **Rundsteuerempfänger mit einem Anschluss für ein Programmier- und Testgerät und Programmier- und Testgerät zur Verwendung in Verbindung mit dem Rundsteuerempfänger.**

(57) Der Anschluss enthält eine Steckerbuchse (4) über welche die Datenleitungen, die Signalleitung und die Stromversorgung des Programmier-und Testgeräts (P) geführt sind. Dieses enthält einen entsprechenden Stecker (6), so dass durch Einstecken dieses einen Steckers (6) in die Steckerbuchse - (4) des Rundsteuerempfängers (E) das System vollständig betriebsbereit ist.

Dies bedeutet hohe Bedienungsfreundlichkeit bei geringen Kosten.

FIG. 1

Xerox Copy Centre

## Rundsteuerempfänger mit einem Anschluss für ein Programmier-und Testgerät und Programmier-und Testgerät zur Verwendung in Verbindung mit dem Rundsteuerempfänger

Die · Erfindung betrifft einen Rundsteuerempfänger mit einem Anschluss für ein Programmier-und Testgerät zur Einspeisung von Programmierdaten über Datenleitungen und eines Testsignals über eine Signalleitung in den Rundsteuerempfänger.

Derartige Rundsteuerempfänger waren bisher so ausgebildet, dass sowohl für die Datenleitungen als auch für die Signalleitung eine spezielle Steckerbuchse vorgesehen war. Da das Programmier-und Testgerät am Aufstellungsort des Rundsteuerempfängers eingesetzt werden soll, kam dazu noch ein weiterer Anschluss für dessen Stromversorgung, sei es als Verbindung zwischen Rundsteuerempfänger und Programmier-und Testgerät oder als spezieller Stecker am Programmier-und Testgerät für den Anschluss an das Netz. Es hat sich gezeigt, dass diese mehrfach vorhandenen Anschlüsse einerseits nicht bedienungsfreundlich sind und anderseits nicht unbeträchtliche Kosten verursachen, so dass gesamthaft für den Anwender diese Rundsteuerempfänger und die Programmier-und Testgeräte nicht von grossem Nutzen waren.

Durch die Erfindung soll nun ein Rundsteuerempfänger geschaffen werden, welcher so ausgebildet ist, dass der Anwender aus der Verwendung eines Programmier-und Testgeräts einen möglichst grossen Nutzen ziehen kann, oder mit anderen Worten, dass ihm hohe Bedienungsfreundlichkeit bei geringen Kosten geboten wird.

Diese Aufgabe wird erfindgungsgemäss dadurch gelöst, dass der Anschluss eine Steckerbuchse aufweist, über welche zumindest zwei der Verbindungen Datenleitung, Signalleitung und Stromversorgung des Programmier-und Steuergeräts geführt sind.

Gemäss einer bevorzugten Weiterbildung des erfindungsgemässen Rundsteuerempfängers sind alle drei genannten Verbindungen Datenleitung, Signalleitung und Stromversorgung über die gemeinsame Steckerbuchse geführt.

Die Erfindung betrifft weiter ein Programmier-und Testgerät zur Verwendung in Verbindung mit dem genannten Rundsteuerempfänger. Dieses ist dadurch gekennzeichnet, dass das Programmier-und Testgerät einen der Steckerbuchse des Rundsteuerempfängers zugeordneten Stecker aufweist, welcher mit Kontakten für zumindest zwei der Verbindungen Datenleitung, Signalleitung und Stromversorgung des Programmier-und Testgeräts versehen ist.

Eine bevorzugte Weiterbildung dieses Programmier-und Testgeräts ist dadurch gekennzeichnet, dass der Stecker Kontakte für alle drei genannten Verbindungen Datenleitung, Signalleitung und Stromversorgung aufweist.

Somit sind durch Einstecken dieses einen Steckers in den Rundsteuerempfänger alle Verbindungen hergestellt und der Programmier-und/oder Testvorgang kann stattfinden. Besonders bedienungsfreundlich ist dabei der Einschluss der Stromversorgung des Programmier-und Testgeräts in den Stecker und dessen Buchse, weil oftmals in unmittelbarer Nähe des Rundsteuerempfängers keine geeignete Steckdose vorhanden ist.

Im folgenden wird die Erfindung anhand eines Ausführungsbeispiels und der Zeichnungen näher erläutert. Es zeigt:

Fig. 1 ein Schema eines Rundsteuerempfängers mit einem zugeordneten Programmier-und Testgerät,

Fig. 2 ein Blockschema des Rundsteuerempfängers von Fig. 1,

Fig. 3 ein Prinzipschema einer Schutzschaltung für die Schaltkreise des Rundsteuerempfängers und des Programmier-und Testgeräts von Fig. 1, und

Fig. 4 ein Schaltbild eines Details der Schutzschaltung von Fig. 3.

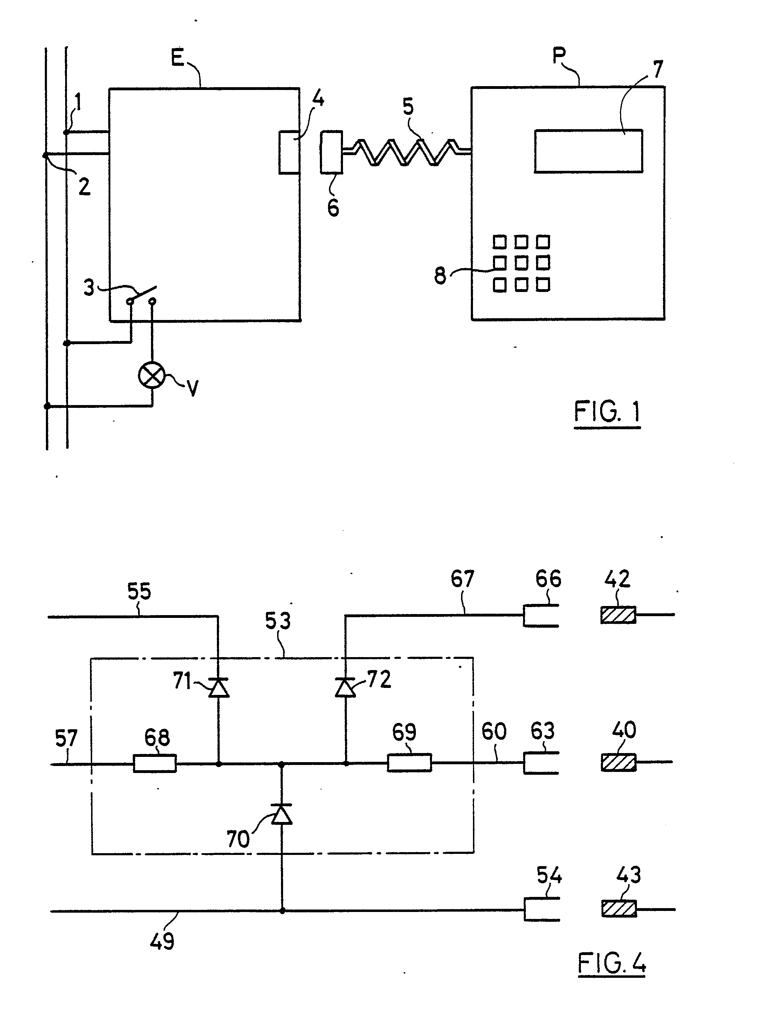

Fig. 1 zeigt einen an zwei Leiter eines Wechselstromnetzes mit Netzklemmen 1 und 2, von denen beispielsweise die Netzklemmen 1 diejenige für die Phase und die Netzklemme 2 diejenige für den Nulleiter ist, angeschlossenen Rundsteuerempfänger E. Der Rundsteuerempfänger E weist in bekannter Weise einen Ausgangskontakt 3 für einen geschalteten Verbraucher V auf und besitzt ausserdem eine Steckerbuchse 4 für den Anschluss eines Programmier-und Testgeräts P. Das Programmier-und Testgerät P weist darstellungsgemäss eine Verbindungsleitung 5 mit einem Stecker 6 zum Anschluss an die Steckerbuchse 4 des Rundsteuerempfängers E, ein Anzeigefeld 7 sowie eine Eingabetastatur 8 auf.

Das Programmier-und Testgerät dient dazu, den Rundsteuerempfänger E auf Befehl und Zusatzfunktionen zu programmieren und eine Funktionsprüfung des Rundsteuerempfängers E vorzunehmen. Die Programmierung erfolgt dabei entweder durch Kopieren von Empfängerdaten ab programmierten Speichern (bei Standardprogrammen) oder durch Handeingabe in die Eingabetastatur 8 und Kopieren ab dieser. Die kopierten Daten werden automatisch überprüft.

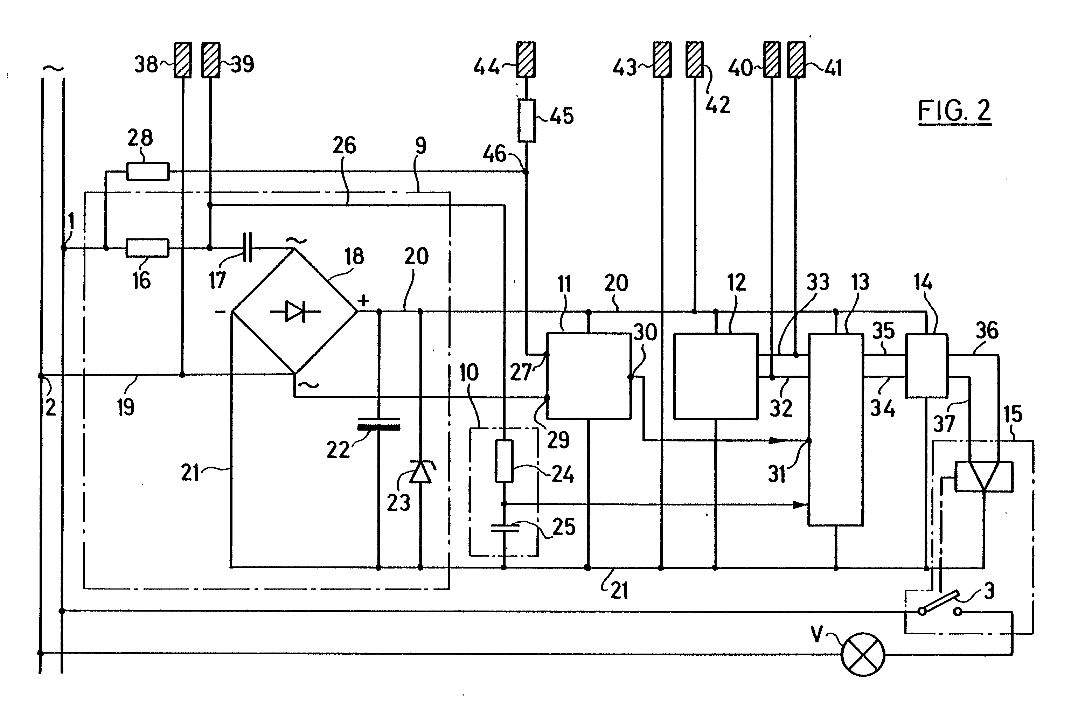

Der Rundsteuerempfänger E besteht gemäss Fig. 2 im wesentlichen aus einer Stromversorgungschaltung 9, einer netztakterzeugenden Schaltung 10, einem Empfangsteil 11, einem Datenspeicher 12, einem Auswerteteil 13 und einem Verstärker 14, welcher ein fernzusteuerndes Schaltorgan 15 antreibt.

Die Stromversorgungsschaltung 9, für deren detaillierte Beschreibung auf die CH-Patentschrift Nr. 567 344 verwiesen wird, enthält einen ersten Schutzwiderstand 16, einen Spannungsteilerkondensator 17, einen Vollweggleichrichter 18, dessen einer Wechselstromanschluss über eine Leitung 19 mit der Nulleiter-Netzklemme 2 verbunden ist, sowie parallel zu den Gleichstromanschlüssen des Vollweggleichrichters 18 zwischen einer Plus-und einer Minussammelschiene 20 bzw. 21 einen Siebkondensator 22 und eine spannungsbegrenzende Zenerdiode 23.

Die netztakterzeugende Schaltung 10, für deren detaillierte Beschreibung auf die CH-Patentschrift Nr. 607 467 verwiesen wird, enthält ein aus einem Widerstand 24 und aus einem Kondensator 25 bestehendes RC-Glied. Der Widerstand 24 ist über eine Leitung 26 mit dem Schutzwiderstand 16 verbunden. Das aus dem Widerstand 24 und dem Kondensator 25 bestehende RC-Glied er zeugt ein netzfrequentes Signal, welches von einem Verbindungspunkt zwischen Widerstand 24 und Kondensator 25 dem Auswerteteil 13 zugeführt wird.

Der Empfangsteil 11, für dessen detaillierte Beschreibung ebenfalls auf die schon genannte CH-Patentschrift Nr. 607 567 verwiesen wird und welcher unter anderem Selektionsmittel für die Fernsteuerfrequenz aufweist, ist mit einem Eingang 27 mit einem zweiten Schutzwiderstand 28 verbunden. An einem zweiten Eingang 29, dem Kompensationseingang, des Empfangsteils 11 liegt die mit der Netzklemme 2 des Nulleiters verbundene Leitung 19. Der Ausgang 30 des Empfangsteils 11 ist mit einem Eingang 31 des Auswerteteils 13 verbunden.

Der Datenspeicher 12 liegt zwischen der Plus-und der Minussammelschiene 20 bzw. 21 und ist über spezielle Verbindungsleitungen 32 und 33 mit dem Auswerteteil 13 verbunden. Der Datenspeicher 12, dessen Inhalt vom Anwender verändert werden kann, ist beispielsweise ein elektronisch lösch-und programmierbarer Festwertspeicher (EEPROM). Ueber die Leitungen 32 und 33, liest der Auswerteteil 13 vom Anwender eingespeicherte Einstelldaten aus dem Datenspeicher 12 heraus oder er speichert Auswerteinformationenen im Datenspeicher 12 ab. Um die Anzahl der Verbindungsleitungen 32, 33 möglichst gering zu halten, wird für diese vorzugsweise ein serieller Datenbus verwendet, dessen Funktionsweise beispielsweise in "I2C Bus Specification, Philips Electronic Components and Materials, Release January 1983, Nr. 9398 615 00011 beschrieben ist.

Als Auswerteteil 13 wird vorzugsweise ein sogenannter One-Chip-Microcomputer verwendet. Dieser wertet die vom Empfangsteil empfangenen Signale aus und gibt je nach deren Uebereinstimmung mit den programmierten Einstelldaten über Leitungen 34 und 35 Steuersignale an den Schaltverstärker 14 ab. Der letztere verstärkt die Steuersignale des Auswerteils 13 und treibt über Leitungen 36 und 37 das Schaltorgan 15. Dieses enthält unter anderem den Ausgangskontakt 3 für den Verbraucher V, welcher durch ein Relais ein-und ausgeschaltet wird.

Wie in Fig. 1 dargestellt ist, kann an den Rundsteuerempfänger E ein Programmier-und Testgerät P angeschlossen werden. Dazu dienen der Stecker 6 und die Steckerbuchse 4, wobei über diese eine Steckerbindung sowohl die Stromversorgung des Programmier-und Testgeräts P, als auch die Datenverbindung zum Datenspeicher 12, als auch die Einspeisung von Testsignalen in den Rundsteuerempfänger E erfolgt.

Die Stromversorgung des Programmier-und Testgeräts P über diese Steckerverbindung 4,6 erfolgt gemäss Fig. 2 derart, dass ein erster Kontakt 38 über die Leitung 19 und die Netzklemme 2 direkt mit dem Netz-Nulleiter und ein zweiter Kontakt 39 über eine Schutzschaltung, darstellungsgemäss den ersten Schutzwiderstand 16, und die Netzklemme 1 mit dem Netz-Phasenleiter verbunden ist. Dass der zweite Kontakt 39 erst nach dem Schutzwiderstand 16 abgegriffen wird, hat den Vorteil, dass innerhalb des Rundsteuerempfängers E, und hier insbesondere direkt bei der Steckerverbindung 4,6, die isolierenden Distanzen zwischen den Kontakten 38 und 39 und der restlichen Elektronik eine geringere Stossspannungsfestigkeit aufweisen dürfen als dies an sich spezifiert ist. Anstatt der üblicherweise geforderten Stossspannungsfestigkeit von mindestens 6kV ist nunmehr anhand der nach dem Schutzwiderstand 16 maximal auftretenden Restspannung lediglich noch eine Spannungsfestigkeit von 2 kV erforderlich. Aus dieser Reduktion der Stossspannungsfestigkeit um zwei Drittel ergeben sich für den Rundsteuerempfänger E ganz wesentliche Platzersparnisse.

Die Datenverbindung zum Datenspeicher 12 erfolgt durch einen sogenannten seriellen Bus, welcher einerseits das Auslesen des Inhalts des Datenspeichers 12 und andererseits das Zuführen von neuen Daten zur Abspeicherung im Datenspeicher 12 ermöglicht. Zu diesem Zweck dienen Kontakte 40 und 41, welche direkt mit dem die Verbindungsleitungen 32 und 33 zwischen dem Datenspeicher 12 und dem Auswerteteil 13 bildenden seriellen Datenbus verbunden sind.

Ueber entsprechende Verbindungsleitungen sind die Spannungspotentiale der Plus-und der Minussammelschiene 20 und 21 an Kontakte 42 bzw. 43 der Steckerbuchse 4 (Fig. 1) geführt, damit mit den Potentialen der Plus-und Minussammelschiene des Programmier-und Testgeräts P ein Potentialausgleich möglich ist.

Die Einspeisung eines Testsignals in den Rundsteuerempfänger E erfolgt über einen Kontakt 44, welcher ebenso wie die schon genannten Kontakte 38 bis 43 in dessen Steckerbuchse 4 (Fig. 1) angeordnet ist. Ein moduliertes Testsignal wird via Kontakt 44 über einen Vorwiderstand 45 dem Empfangsteil 11 zugeführt. Aus Fig. 2 ist ersichtlich, dass dieses Testsignal mit Ausnahme der Umgehung des zweiten Schutzwiderstandes 28 den gleichen Pfad einschlägt wie ein von den Netzklemmen 1 und 2 kommendes reguläres Steuersignal. Damit deckt ein mit einem derartigen Testsignal vom Programmier-und Testgerät P (Fig. 1) aus durchgeführter Test den Empfänger E beinahe vollständig ab und ist daher in hohem Masse aussagekräftig und repräsentativ.

Dieser Test wird in der Praxis so durchgeführt, dass im Programmier-und Testgerät P ein Testsignal ausgelöst wird, welches sowohl im Bitmuster als auch in dessen Modulation einem normalen Rundsteuertelegramm entspricht. Dieses Testsignal wird im Punkt 46 (Fig. 2) auf das normale Eingangssignal des Empfangsteils 11 superponiert. Wenn der Rundsteuerempfänger E korrekt arbeitet, dann muss er auf dieses Testsignal "richtig" reagieren, d.h. es muss beispielsweise das Schaltorgan 15 betätigt werden.

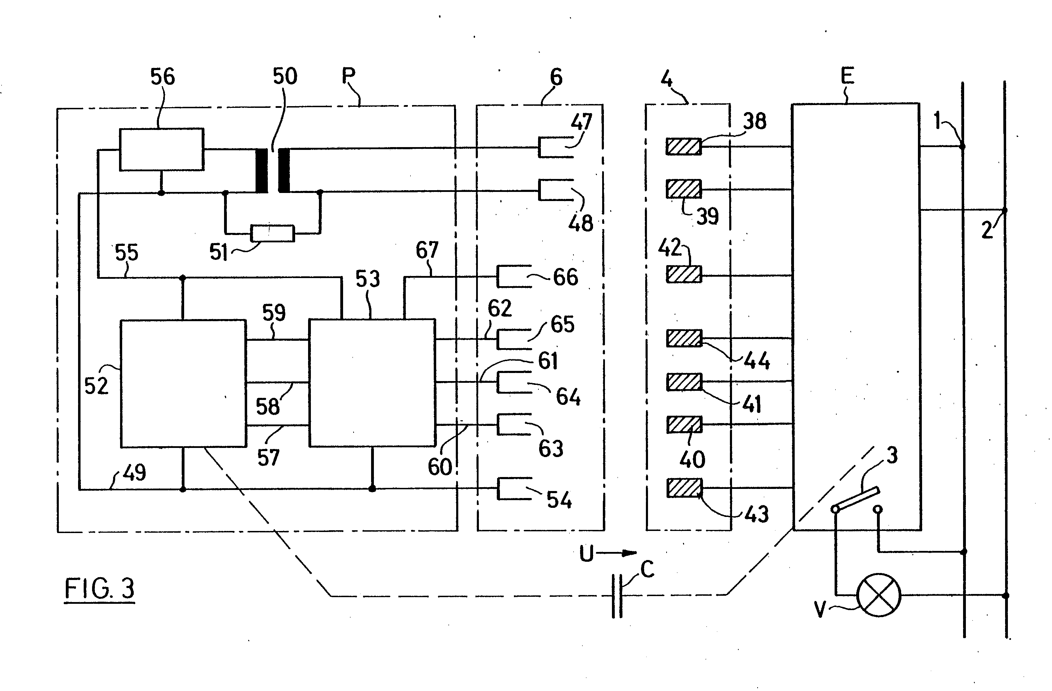

Wenn zwei elektronische Geräte, insbesondere zwei Schaltkreise mit Halbleitern wie der Rundsteuerempfänger E und das Programmier-und Testgerät P, zusammengeschaltet werden, dann besteht bekanntlich das Risiko, dass durch statische Entladungen oder durch nicht aufeinander abgestimmte Spannungen elektronische Bauteile zerstört werden. Ausserdem besteht beim Anschliessen eines tragbaren Gerätes an ein am Netz angeschlossenes Gerät die weitere Gefahr des Auftretens von gefährlichen Berührungsspannungen. Die nachstehend anhand der Figuren 3 und 4 beschriebenen Schutzmassnahmen betreffen lediglich den Schutz der Schaltkreise; der Personenschutz ist durch andere, an sich bekannte konstruktive Massnahmen gewährleistet.

Fig. 3 zeigt den in Fig. 2 dargestellten und an die Netzklemmen 1 und 2 angeschlossenen Rundsteuerempfänger E mit seinem Ausgangskontakt 3 für den Verbraucher V und mit seinen in die Steckerbuchse 4 (Fig. 1) geführten Verbindungskontakten 38 bis 44 zum Programmier-und Testgerät P, welches entsprechende, in seinen Stecker 6 (Fig. 1) geführten Verbindungskontakte aufweist. Beim Einstecken des Steckers 6 in die Steckerbuchse 4 kontaktiert das Programmier-und Testgerät P zuerst mit seinen Stromversorgungskontakten 47 und 48 die entsprechenden Kontakte 38 bzw. 39 des Empfängers E. Dadurch können eventuelle statische Aufladungen zwischen dem Programmier-und Testgerät P und dem Empfänger E ausgeglichen werden.

Diese Situation lässt sich symbolisch durch eine geladene, in der Figur gestrichelt eingezeichnete, Streukapazität C zwischen den elektronischen Schaltkreisen der beiden Geräte E und P darstellen. Wenn die stromversorgenden Kontakte 47 und 48 des Programmier-und Testgeräts P vor den anderen elektronischen Verbindungen mit den speisenden Anschlüssen 38 und 39 des Rundsteuerempfängers E kontaktieren, so kann zwischen den beiden Geräten über die Minussammelschiene 49 des Programmier-und Testgeräts P und einen den Ausgleichsstroms begrenzenden und den Transformator 50 des Programmier-und Testgeräts P überbrückenden Widerstand 51 ein Ladungsausgleich (Pfeil U) erfolgen. Dadurch sind bis zur Verbindung der übrigen elektronischen Schaltkreise der beiden Geräte E und P hohe Potentialdifferenzen weitgehend ausgeglichen.

Die eigentliche Elektronik des Programmier-und Testgeräts P ist in Fig. 3 mit 52 bezeichnet. Zwischen dieser und dem Stecker 6 ist eine Schutzschal tung 53 vorgesehen, welche dazu dient, Speisespannungsdifferenzen zwischen der Elektronik des Rundsteuerempfängers E und der Elektronik 52 auszugleichen. Der Schutzschaltung 53 wird darstellungsgemäss das Potential der Minussammelschiene 49 des Programmier-und Testgeräts P zugeführt. Dieses Potential ist über einen Kontakt 54 mit dem Kontakt 43 des Empfängers E und damit mit dessen Minussammelschiene verbunden. Ebenso wird das Potential der mit 55 bezeichneten Plussammelschiene des Programmier-und Testgeräts P, welches von einer Reglerschaltung 56 generiert wird, der Schutzschaltung 53 zugeführt.

In Analogie zum Empfänger E enthält das Programmier-und Testgerät P Leitungen 57, 58 eines seriellen Busses und eine Testsignalleitung 59, welche alle von der Elektronik 52 zur Schutzschaltung 53 geführt sind und von dieser als Leitungen 60, 61 und 62 zu Kontakten 63, 64 und 65 im Stecker 6. Der Stecker 6 enthält schliesslich noch einen weiteren Kontakt 66 zur Verbindung mit dem Plussammelschienen-Kontakt 42 des Empfängers E. Der Kontakt 66 ist über eine Leitung 67 ebenfalls an die Schutzschaltung 53 geführt, welche nachfolgend anhand von Fig. 4 näher beschrieben wird.

Fig. 4 zeigt die Schutzschaltung 53 für die Teile des seriellen Busses des Programmier-und Empfangsgeräts P bildenden Leitungen 57 und 60, welche zum Kontakt 63 des Steckers 6 führen. Auf allen anderen Signalleitungen 58, 61 und 59, 62 ist ebenfalls eine derartige Schutzschaltung 53 aufgebaut.

Die Schutzschaltung 53 sorgt dafür, dass auf den Signalleitungen 57 und 60 keine Ueberspannungen positiver oder negativer Polarität entstehen können, welche die an diese Leitungen angeschlossenen Ein-und Ausgangsschaltungen von elektronischen Schaltkreisen zerstören könnten. Derartige zerstörerische Ueberspannungen sind insbesondere beim Einstecken des Steckers 6 in die Steckerbuchse 4 (Fig. 1) zu erwarten, oder dann, wenn bei an den Rundsteuerempfänger E angeschlossenem Programmier-und Testgerät P das stromversorgende Netz ein-und ausgeschaltet wird. In diesen Fällen muss immer angenommen werden, dass die beiden Geräte ihre interne Gleichstromversorgung zwischen Minus-und Plussammelschiene nicht gleichzeitig aufbauen und beendet haben, und dass dasjenige Gerät, das seine interne Versorgungsspannung bereits aufgebaut hat, auf der entsprechenden Signalleitung. eine Spannung erzeugt. Diese Spannung kann vorübergehend höher sein als die interne Versorgungsspannung zwischen Minus-und Plussammelschiene des anderen Geräts, was für dessen Halbleiterschaltung jedoch unzulässig ist. Gegen derartige Ueberspannungen wirkt die Schutzschaltung 53.

Gemäss Fig. 4 ist die Schutzschaltung 53 auf beide Seiten, Elektronik 52 einerseits und Stecker 6 (Fig. 3) anderseits, symmetrisch und enthält in den Leitungen 57 und 60 je einen strombegrenzenden Widerstand 68 bzw. 69, sowie in den Verbindungen zur Minussammelschiene 49 und zur Plussammelschiene 55 und in der Leitung 67 zum Kontakt 66 je eine Diode 70, 71 bzw. 72.

Erscheint beispielsweise nach dem Kontaktieren des Steckers 6 mit der Stekkerbuchse 4 des Empfängers E (Fig. 3) an der Signalleitung 60 eine höhere Spannung als die Spannung zwischen Plussammelschiene 55 und Minussammelschiene 49, so fliesst über den strombegrenzenden Widerstand 69 und die Diode 71 ein Ausgleichstrom auf die Plussammelschine 55. Auf der Leitung 57 erscheint dann gegenüber der Plussammelschine 55 nur noch eine unschädliche Ueberspannung in der Grössenordnung der Flusspannung der Diode 71.

Erscheint anderseits nach dem Kontaktieren des Steckers 6 an der Leitung 60 eine tiefere Spannung als das Potential der Minussammelschiene 49, so wird dieses über die Diode 70 und den Widerstand 69 ausgeglichen und auf der Leitung 57 erscheint nur noch eine unschädliche Unterspannung in der Grössenordnung der Flussspannung der Diode 70.

Die Funktion der Schutzschaltung 53 tritt erst dann ausser Kraft, wenn die beiden miteinander verbundenen Geräte, Rundsteuerempfänger E und Programmier-und Testgerät P, zwischen ihren Minus-und ihren Plussammelschienen eine vergleichbar hohe Spannung aufweisen. Dann können auf den Signalleitungen in beide Richtungen Signale von der Grössenordnung der beiden Speisespannungen übertragen werden.

Wie bereits erwähnt wurde, ist auf den beiden anderen Signalleitungen 58, 61 und 59, 62 (Fig. 3) eine gleiche Schutzschaltung wie die in Fig. 4 dargestellte Schutzschaltung 53 aufgebaut.

## Ansprüche

1. Rundsteuerempfänger mit einem Anschluss für ein Programmier-und Testgerät zur Einspeisung von Programmdaten über Datenleitungen und eines Testsignals über eine Signalleitung in den Rundsteuerempfänger, dadurch gekennzeichnet, dass der Anschluss eine Steckerbuchse (4) aufweist, über welche zumindest zwei der Verbindungen Datenleitung (40, 41), Signalleitung (44) und Stromversorgung (38, 39) des Programmier-und Steuergeräts (P) geführt sind.

2. Rundsteuerempfänger nach Anspruch 1, dadurch gekennzeichnet, dass alle drei genannten Verbindungen Datenleitung (40, 41), Signalleitung - (44) und Stromversorgung (38, 39) über die gemeinsame Steckerbuchse (4) geführt sind.

3. Rundsteuerempfänger nach Anspruch 2, dadurch gekennzeichnet, dass zur Erzielung einer hohen Spannungsfestigkeit bei kleiner Dimension der Steckerbuchse (4) die Stromversorgungsleitungen (38, 39) für das Programmier-und Testgerät - (P) von den Netzklemmen (2, 1) des Empfängers - (E) über eine Schutzschaltung an die Steckerbuchse geführt sind.

4. Rundsteuerempfänger nach Anspruch 3, dadurch gekennzeichnet, dass die genannten Schutzschaltung durch einen Schutzwiderstand - (16) der Stromversorgungsschaltung (9) des Empfängers (E) gebildet ist.

5. Rundsteuerempfänger nach einem der Ansprüche 1 bis 3, dadurch gekennzeichnet, dass die Datenleitungen (40, 41) durch einen speziellen Datenbus mit wenig Verbindungsleitungen, vorzugsweise durch einen sogenannten I2C-Bus gebildet sind.

6. Rundsteuerempfänger nach Anspruch 5, dadurch gekennzeichnet, dass den Datenleitungen (40, 41) ein Datenspeicher (12) mit über das Programmier-und Testgerät (P) veränderbarem Inhalt zugeordnet und dass dieser Datenspeicher durch einen nicht flüchtigen, elektrisch lösch-und programmierbaren Festwertspeicher, ein sogenanntes EEPROM gebildet ist.

7. Rundsteuerempfänger nach einem der Ansprüche 1 bis 3, dadurch gekennzeichnet, dass die Signalleitung (44) für das Testsignal vom entsprechenden Kontakt in der Steckerbuchse (4) über einen Vorwiderstand (45) unmittelbar nach dem ersten nach der entsprechenden Netzklemme (1) angeordneten Schutzwiderstand (28) an den Empfangsteil (11) des Rundsteuerempfängers (E) geführt ist.

8. Programmier-und Testgerät zur Verwendung in Verbindung mit einem Rundsteuerempfänger nach Anspruch 1, dadurch gekennzeichnet, dass das Programmier-und Testgerät (P) einen der Steckerbuchse (4) des Rundsteuerempfängers (E) zugeordneten Stecker (6) aufweist, welcher mit Kontakten (63, 64; 65; 47, 48) für zumindest zwei der Verbindungen Datenleitung (60, 61), Signalleitung - (62) und Stromversorgung des Programmier-und Testgeräts versehen ist.

9. Programmier-und Testgerät nach Anspruch 8, dadurch gekennzeichnet, dass der Stecker (6) Kontakte (63, 64; 65; 47, 48) für alle drei genannten Verbindungen Datenleitung (60, 61), Signalleitung - (62) und Stromversorgung aufweist.

10. Programmier-und Testgerät nach Anspruch 9, dadurch gekennzeichnet, dass die Plus-und die Minussammelschienen (20, 21) und (55, 49) des Rundsteuerempfängers (E) bzw. des Programmier-und Testgeräts (P) zu in der Steckerbuchse (4) bzw. im Stecker (6) angeordneten, zugehörigen Kontakten (42, 43) und (66, 54) geführt sind.

11. Programmier-und Testgerät nach Anspruch 9, dadurch gekennzeichnet, dass das Programmier-und Testgerät (P) eine erste Schutzschaltung zur Verhinderung des Fliessens zerstörerischer Ladung auf den Rundsteuerempfänger (E) im Augenblick der Verbindung von Stecker (6) und Stekkerbuchse (4) aufweist.

12. Programmier-und Testgerät nach Anspruch 11, dadurch gekennzeichnet, dass die stromversorgenden Kontakte (47, 48) im Stecker (6) gegenüber den anderen Kontakten (54; 63-66) vorlaufend sind.

13. Programmier-und Testgerät nach Anspruch 9, gekennzeichnet durch eine zwischen dem Stecker (6) und dem Elektronikteil (52) angeordnete zweite Schutzschaltung (53), welche mit der Plus-und der Minussammelschiene (55, 49) des Programmier-und Testgeräts (P) verbunden und über eine weitere Leitung (67) an die Plussammelschiene des Empfängers (E) angeschlossen ist und über welche die verschiedenen Signalleitungen (57, 58, 59) geführt sind.

14. Programmier-und Testgerät nach Anspruch 13, dadurch gekennzeichnet, dass die zweite Schutzschaltung (53) durch je eine in den Verbindungen zur Plus-und Minussammelschiene (55, 49) und in der weiteren Leitung (67) angeordnete Diode (71, 70, 72) sowie durch je einen im jeweiligen Ast der betreffenden Signalleitung (57, 58, 59) zwischen der Abzweigung mit der Diode und dem Elektronikteil (52) bzw. dem Stecker (6) angeordneten Widerstand (68 bzw. 69) gebildet ist.

FIG. 1

FIG. 4

FIG. 2

0 229 268

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 483 579 (CSEA CONSORZIO PER LO SVILUPPO DELL'ELETTRONICA E L'AUTOMAZIONE) <br> * Seite 6, Zeile 24 - Seite 7, Zeile 31;·Figuren 1,3 * | 1 | H 02 J 13/00 <br> H 01 R 13/66 <br> G 05 B 19/04 |
| A | ELECTRONIQUE INDUSTRIELLE, Nr. 77, 15. Oktober 1984, Seiten 77-83, Paris, FR; SOURISSE: "Evolution des automates programmables séquentiels de taille moyenne ou petite" <br> * Seite 80, linke Spalte, Zeile 19 - Seite 81, linke Spalte, Zeile 45; Figuren 5,8 * | 1 | |
| A | GB-A-2 079 492 (YOKOGAWA ELECTRIC WORKS LTD) <br> * Seite 2, Zeilen 6-55; Seite 3, Zeile 82 - Seite 4, Zeile 32; Zusammenfassung; Figuren 1,2 * | 1 | RECHERCHIERTE SACHGEBIETE (Int. Cl.4) <br><br> H 02 J <br> G 05 B <br> G 06 F |
| A | SIEMENS POWER ENGINEERING & AUTOMATION, Band 7, Nr. 3, Mai/Juni 1985, Seiten 174-177, Erlangen, DE; G. KOCH et al.: "Fully micro-processor-based feeder protection" <br> * Seite 176, Spalte 2, Zeile 2 - Seite 176, Spalte 3, Zeile 9; Figuren 1-3 * | 1 | H 02 G <br> H 01 R <br> G 01 R |

-/-

Der vorliegende Recherchenbericht wurde für alle Patentansprüche erstellt.

| Recherchenort <br> DEN HAAG | Abschlußdatum der Recherche <br> 19-03-1987 | Prüfer <br> FOURRICHON,P.M.L. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument ·
L : aus andern Gründen angeführtes Dokument

& : Mitglied der gleichen Patentfamilie, übereinstimmendes Dokument

EPA Form 1503 03 82

Europäisches
Patentamt

**EUROPÄISCHER RECHERCHENBERICHT**

Nummer der Anmeldung

EP 86 11 6283

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 142 970 (J.R.McEOWEN) <br> * Zusammenfassung; Figuren 1,2 * | 1 | |
| A,D | FR-A-2 334 226 (ZELLWEGER USTER SA) <br> * Seite 3, Zeilen 7-14 * | 1 | |
| A,D | DE-A-2 409 884 (ZELLWEGER USTER SA) <br> * Patentansprüche 1-7; Figuren 1-3 * | 1,4,7 | |

RECHERCHIERTE SACHGEBIETE (Int. Cl.4)

Der vorliegende Recherchenbericht wurde für alle Patentansprüche erstellt.

| Recherchenort <br> DEN HAAG | Abschlußdatum der Recherche <br> 19-03-1987 | Prüfer <br> FOURRICHON,P.M.L. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82